# EUROPÄISCHE PATENTSCHRIFT

(11) **EP 0 287 965 B1**
(45) Veröffentlichungstag und Bekanntmachung des Hinweises auf die Patenterteilung: **30.06.1993**
(21) Anmeldenummer: 88106018.0
(22) Anmeldetag: 15.04.1988
(51) Int. Cl.: G11B 15/14, G11B 5/53, G11B 5/00, G11B 33/12, G11B 5/008, G11B 5/09

(54) **Recorder mit einer rotierenden Kopftrommel**
Recorder with a rotating-head drum
Enregistreur à tambour à têtes rotatif

(30) Priorität: 22.04.1987 DE 3713429
(43) Veröffentlichungstag der Anmeldung: 26.10.1988
(73) Patentinhaber: Deutsche Thomson-Brandt GmbH, 78003 Villingen-Schwenningen (DE)
(72) Erfinder: Scholz, Werner, Dipl.-Ing., D-3007 Gehrden (DE); Keesen, Heinz-Werner, Dr.-Ing., D-3000 Hannover (DE)
(74) Vertreter: Einsel, Robert, Dipl.-Ing.

(56) Entgegenhaltungen:
- EP-A- 0 074 796
- DE-A- 3 318 987
- DE-A- 3 516 527
- GB-A- 2 173 341
- US-A- 3 673 349
- PATENT ABSTRACTS OF JAPAN, Bd. 9, Nr. 195 (P-379)(1918),13.August 1985;& JP-A-60061901
- RESEARCH DISCLOSURE, Nr. 282, Oktober 1987, New York, NY, US; Seiten 599 - 600: "Apparatus for contemporaneously coupling signals to and from a rotary head scanner"
- PATENT ABSTRACTS OF JAPAN, Bd. 8, Nr. 204 (P-301)(1641),18.September 1984;& JP-A-59087604

## Beschreibung

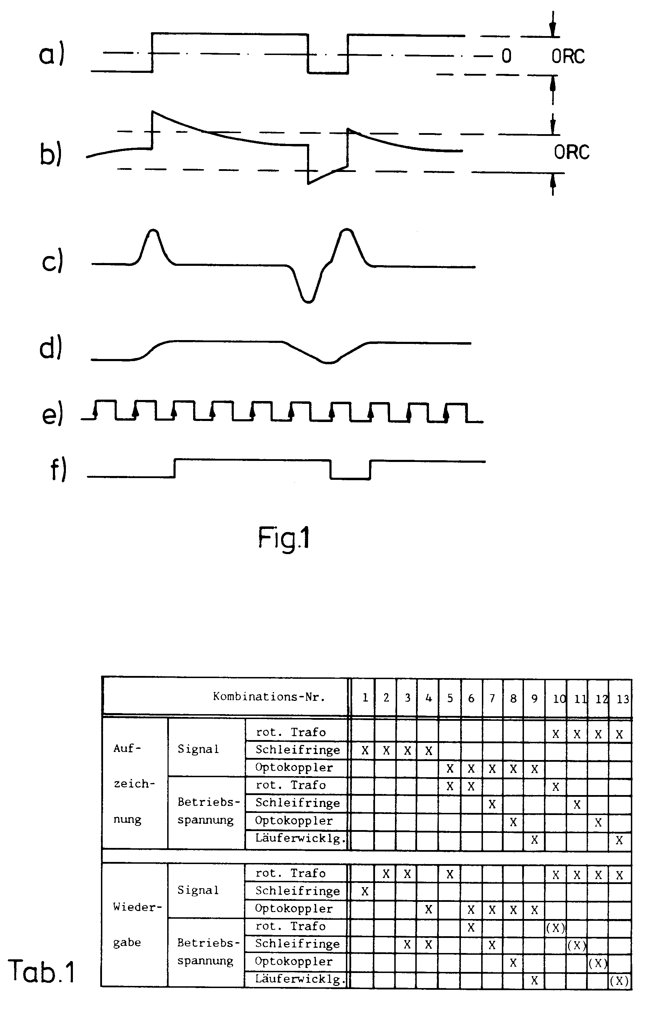

Bei der Aufzeichnung von digitalen Audio- oder Videosignalen auf magnetischen Aufzeichnungsträgern muß das Signal entweder mit Gleichspannungskopplung den Aufzeichnungsköpfen zugeführt werden, oder es sind Aufzeichnungscodes zu verwenden, die nicht nur gleichspannungsfrei sind, sondern auch möglichst geringe tieffrequente Spektralanteile besitzen. Die Übertragung mit der Gleichspannungskomponente wird im folgenden mit DC-Kopplung (direct current) bezeichnet. Diese Forderung wird anhand der Fig. 1 erläutert.

Fig. 1a zeigt ein Binärsignal, das den Aufzeichnungsköpfen mit DC-Kopplung zugeführt wird. Die Signalamplitude entspricht dem optimalen Aufzeichnungsstrom ORC (optimal recording current). Das ist der Strom, bei dem für die kürzesten Signalhalbwellen die größte Wiedergabeamplitude erzielt wird. In Fig. 1b erfolgt die Signalzuführung ohne DC-Kopplung. Es ist ersichtlich, daß die Einhaltung des optimalen Aussteuerbereiches für das Magnetband und die Köpfe nicht mehr möglich ist. Wenn Übersteuerungen vermieden werden sollen, kann nur noch mit halber Signalamplitude aufgezeichnet werden. Bei langen Halbwellen fällt der Kopfstrom auf Null ab, so daß eine bereits vorhandene Aufzeichnung beim Überschreiben nicht mehr gelöscht wird.

Fig. 1c zeigt das Lesesignal einer mit DC-Kopplung durchgeführten Aufzeichnung. Die Magnetisierung der Aufzeichnungsschicht entspricht dem Signal gemäß Fig. 1a. Die Flußänderungen an den Impulsflanken erzeugen bei der Abtastung den in Fig. 1c dargestellten Spannungsverlauf. Durch Integration des Signals gemäß Fig. 1c entsteht das Signal gemäß Fig. 1d. Durch Abtastung des Signals gemäß Fig. 1d mit dem regenerierten Takt gemäß Fig. 1e wird die ursprüngliche Binärfolge gemäß Fig. 1a wiedergewonnen. Diese ist in Fig. 1f dargestellt.

Bei der magnetischen Aufzeichnung mit rotierenden Köpfen ist es bekannt, das Aufzeichnungssignal mit rotierenden Übertragern auf die auf der rotierenden Kopftrommel angeordneten Köpfe zu übertragen. Dabei ist keine DC-Kopplung möglich. Bei dem bekannten R-DAT-System (rotating digital audio tape) für die digitale Aufzeichnung von Tonsignalen wird daher ein 8/10-Übertragungscode verwendet. Dadurch wird die Bitrate von 8 auf 10 Bit je Datenwort, d.h. um 25 % erhöht. Diese Erhöhung der Bitrate ist vermeidbar, wenn es gelingt, den rotierenden Köpfen das Aufzeichnungssignal mit DC-Kopplung zuzuführen.

Es ist bekannt (DE-A-33 18 987), für die Aufnahme und die Wiedergabe verschiedene Übertragungsmittel einzusetzen, z.B. getrennten Übertrager für Aufnahme und Wiedergabe.

Es ist auch bekannt (DE-A-35 16 527), zur Spannungsversorgung von aktiven Teilen auf der rotierenden Trommel diese Trommel als Generator auszubilden, der Betriebsspannungen für aktive Halbleiterbauteile erzeugt.

Es ist ferner bekannt (Patent Abstracts of Japan, Band 9, Nr. 195 entsprechend JP-A-50-61901) verschiedene, aber nicht verschiedenartige Übertragungsmittel für die Aufnahme und Wiedergabe einzusetzen, z.B. Optokoppler für beide Betriebsarten.

In Tabelle 1 sind einige besonders zweckmäßige Kombinationen dieser Übertragungsmöglichkeiten für die Aufzeichnung und die Wiedergabe zusammengestellt. Diese Kombinationsmögligkeiten sind die Kombinationsnummern 2 - 5. Sofern aktive Elemente, z.B. Verstärkerschaltungen, auf der Trommel erforderlich sind, muß auch die für Betriebsspannungserzeugung benötigte Energie auf die Trommel übertragen werden. Bei der Tabelle 1 ist folgendes zu berücksichtigen:
Der rotierende Übertrager ist gleichbedeutend mit DC-freier Signalübertragung. Diese Übertragung könnte auch mit einem feststehenden und einem rotierenden Kapazitätsbelag erfolgen oder mit Ultraschall. Die Ultraschallübertragung wäre z.B. zweckmäßig bei einer Kopftrommel, die mit Hilfe einer Hydraulik eine axiale Hubbewegung ausführt. Eine derartige Lösung ist beschrieben in der DE-OS 36 18 661. Ultraschallgeber und -Aufnehmer stehen dabei in Kontakt mit der Hydraulikflüssigkeit, die als Medium für die Übertragung des Signals von dem festen zum rotierenden Teil der Kopftrommel dient. Bei einer sogenannten matrixartigen Aufzeichnung gemäß der DE-OS 35 09 584 werden mit einer rotierenden und in einer Hubbewegung quer zur Bandlängsrichtung bewegten Kopftrommel auf dem Band aufeinanderfolgende Blöcke jeweils mit parallel zur Bandkante verlaufenden Spuren geschrieben. Bei einer solchen Aufzeichnung sind die in Abhängigkeit von der Hubrichtung entstehenden Änderungen der Bitrate vernachlässigbar. Bei DC-freier Übertragung muß auf der rotierenden Kopftrommel eine Signalregenerierung, d.h. eine Wiederherstellung der DC-Komponente, erfolgen. Die Treiber für die Erzeugung des Schreibstromes müssen sich dabei ebenfalls auf der Kopftrommel befinden. Dazu muß auf der Kopftrommel eine Betriebsspannung verfügbar sein. Die Energie zur Erzeugung dieser Betriebsspannung muß ebenfalls auf die Trommel übertragen werden. Da für eine korrekte Signalregenerierung der Bittakt erforderlich ist, kann z.B. aus dem auf die Trommel übertragenen Bittakt die Betriebsspannung gewonnen werden. Eine andere Lösung besteht darin, daß die auf die Trommel übertragene Wechselspannung zur Erzeugung der Betriebsspannung eine solche Frequenz und Phase besitzt, daß hieraus der Bittakt erzeugt werden kann.

Die Schleifringe sind gleichbedeutend mit einer galvanischen Übertragung, d.h. eine Signalübertragung auf die rotierende Trommel mit DC-Kopplung. Die galvanische Übertragung könnte auch über die Lager der Trommelwelle oder über Quecksilberkontakte erfolgen.

Der Optokoppler ist gleichbedeutend mit Trägerfrequenzübertragung. Im Falle des Optokopplers handelt es sich um amplitudenmodulierte elektromagnetische Wellen. Es ist auch eine AM- oder Fm-Übertragung über einen der unter 1. genannten DC-freien Übertragungswege denkbar. In jedem Fall muß auf der rotierenden Trommel das Modulationssignal wiedergewonnen werden. Hierzu genügt grundsätzlich eine passive Schaltung mit Demodulationsdioden. Im allgemeinen wird jedoch zusätzlich eine Verstärkerschaltung erforderlich sein, um den Aufsprechstrom zu erzeugen. Daher muß hier wie bei Punkt a) eine Energieübertragungsmöglichkeit für die auf der rotierenden Trommel benötigte Betriebsspannung vorgesehen werden. Bei direkt angetriebener Kopftrommel kann für die Energieübertragung auch eine Läuferwicklung des Antriebsmotors verwendet werden.

### Zu den in Tabelle 1 angegebenen Kombinationsmöglichkeiten:

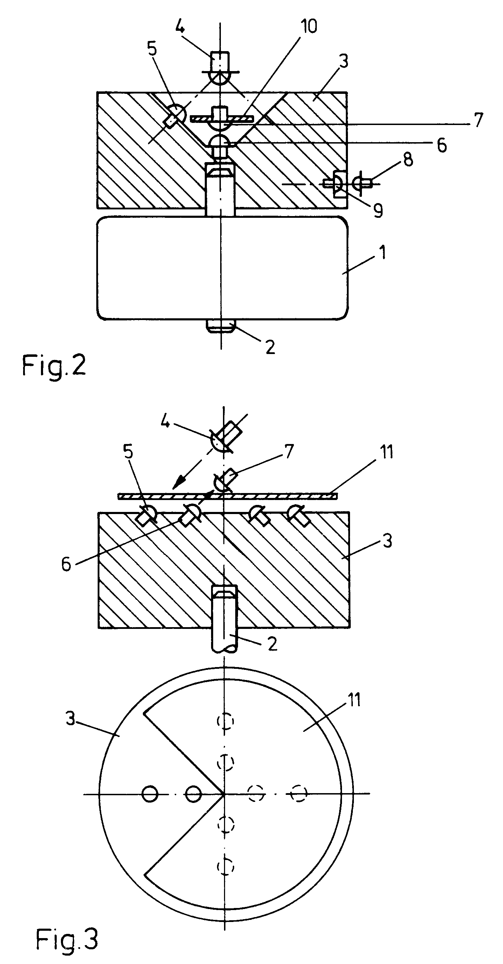

1. Die Übertragung über Schleifringe für den Aufzeichnungsstrom ist wegen der galvanischen Kopplung relativ einfach und vorteilhaft. Besonders billig wird die Einrichtung, wenn die Schleifringe auch für die Übertragung des Wiedergabesignals verwendet werden.
2. Aus Gründen des Störabstandes ist es günstiger, das unverstärkte Wiedergabesignal über einen rotierenden Übertrager zu übertragen. Wenn dieselben Köpfe für die Aufzeichnung und die Wiedergabe verwendet werden, kann die Umschaltung über Relaiskontakte erfolgen, wobei der Strom für die Relaiswicklung z.B. über einen zusätzlichen Schleifring geführt wird.
3. Die bei der Wiedergabe nicht benutzten Schleifringe können dazu dienen, der Kopftrommel bei der Wiedergabe die Betriebsspannung für unmittelbar an den Köpfen befindliche Vorverstärker zuzuführen.
4. Wenn sich auf dem rotierenden Teil des Kopfrades Verstärker befinden, kann das Wiedergabesignal auch über Optokoppler zugeführt werden.
5. Wird bei der Übertragung des Aufzeichnungssignals über Optokoppler die hierzu auf der Kopftrommel erforderliche Betriebsspannungsenergie über einen rotierenden Übertrager geliefert, so kann dieser Übertrager bei der Wiedergabe zur Signalübertragung verwendet werden.
6. - 9. Werden bei der Aufzeichnung und bei der Wiedergabe Optokoppler verwendet, ist in beiden Fällen auf der rotierenden Kopftrommel eine Betriebsspannung erforderlich. Die Betriebsspannungsenergie wird für die Aufzeichnung und für die Wiedergabe auf die gleiche Weise übertragen. Beispiele für die Anordnung der Optokoppler sind in Fig. 2 und 3 dargestellt. Die rotierende Kopftrommel 3 wird durch die Welle 2 des Motors 1 angetrieben. Der Optokoppler 4, 5 dient für die Übertragung des Aufzeichnungssignals von dem feststehenden Sender 4 zu dem mit der Trommel 3 rotierenden Empfänger 5. Das Wiedergabesignal wird durch den Optokoppler 6, 7 übertragen. Durch die axiale Anordnung benötigt der auf der Trommel 3 befindliche Sender 6 weniger Leistung. Bei Ausrüstung des Motors 1 mit einer Hohlwelle könnten auch beide Optokoppler axial angeordnet sein. Zwecks Steuerung der Kopfumschaltung bei einer mit mehreren Köpfen ausgerüsteten Kopftrommel kann der Schaltung auf der Kopftrommel durch den feststehenden Sender 8 und den mit der Trommel 3 rotierenden Empfänger 9 eine Information über die Drehphase der Trommel 3 zugeführt werden.
   In Fig. 3 besitzt jeder Kopf seinen eigenen Aufsprech- und Wiedergabeverstärker sowie einen eigenen Lichtempfänger 5 und einen Lichtsender 6. Die Umschaltung der Signalübertragung erfolgt durch die feststehende, mit einer sektorförmigen Öffnung versehene Blende 11. Die optische Signalübertragung bringt besonders dann Vorteile, wenn verschiedene Köpfe sich gleichzeitig im Aufnahme- und Wiedergabebetrieb befinden. Die Lichtübertragungsstrecken für die beiden Übertragungsrichtungen können durch Abdeckungen 10 beliebig gut entkoppelt werden.
10.-13. Wenn die Signalübertragung in beiden Richtungen durch den rotierenden Übertrager erfolgt, muß bei der Aufzeichnung eine Betriebsspannung für eine Signalregenerierungsschaltung auf der rotierenden Trommel verfügbar sein. Die Wiederherstellung der DC-Komponente durch eine passive Schaltung, z.B. Klemmung des Signals mit Hilfe einer Niveaudiode, führt wegen der endlichen Steilheit der Pegelübergänge bereits zu Signalverzerrungen. Da für eine einwandfreie Signalregenerierung der Bittakt erforderlich ist, muß dieser auf der Trommel regeneriert oder auf die Trommel übertragen werden. Das letztere ist sicher zweckmäßig, wobei der Bittakt mit so hoher Leistung zu übertragen ist, daß daraus auch die auf der Trommel benötigte Betriebsspannung gewonnen werden kann. Das Digitalsignal kann in der in Fig. 1c dargestellten Form über den rotierenden Übertrager geführt werden. Auf der Trommel wird dann durch Integration (Fig. 1d) und Abtastung mit dem Takt e das korrekte Digitalsignal für die Erzeugung des Aufzeichnungsstroms wiedergewonnen.

Bei der Wiedergabe können die Köpfe in herkömmlicher Weise direkt an den rotierenden Übertrager angeschlossen werden. Da auf der Trommel eine Betriebsspannung verfügbar ist, bedeutet die Anordnung der Vorverstärker direkt an den Köpfen nur einen geringen Mehraufwand.

Um den erhöhten Energiebedarf bei der Aufzeichnung "auszupuffern", kann auf der Trommel ein Betriebsspannungsakku angeordnet sein, der zu Zeiten geringeren Energiebedarfs, z.B. Stand by oder Wiedergabe geladen wird.

## Patentansprüche

1. Recorder mit einer rotierenden Kopftrommel, bei dem das Signal mittels eines Übertragungsgliedes zwischen einem stationären Teil und der Kopftrommel (3) übertragen wird, **dadurch gekennzeichnet,** daß die Signalübertragung bei der Aufnahme und bei der Wiedergabe über verschiedenartige, nach unterschiedlichen physikalischen Kopplungsmöglichkeiten arbeitende, der Kopftrommel (3) zugeordnete Übertragungsglieder (4 - 9) erfolgt.

2. Recorder nach Anspruch 1, dadurch gekennzeichnet, daß die Signalübertragung bei der Aufnahme über Schleifringe und bei der Wiedergabe über ein nicht galvanisches Übertragungsglied erfolgt und die Schleifringe bei der Wiedergabe zur Zuführung einer Betriebsspannung für auf der Kopftrommel (3) angeordnete Signalverstärker dienen.

3. Recorder nach Anspruch 2, dadurch gekennzeichnet, daß das nicht galvanische Übertragungsglied ein rotierender Übertrager oder ein Optokoppler (4 - 9) ist (Fig. 2, 3).

4. Recorder nach Anspruch 1, dadurch gekennzeichnet, daß bei der Übertragung des Aufzeichnungssignals über einen Optokoppler eine Betriebsspannung über einen rotierenden Übertrager auf die Kopftrommel (3) geführt ist, der bei der Wiedergabe zur Signalübertragung dient.

5. Recorder nach Anspruch 1, dadurch gekennzeichnet, daß die Betriebsspannung für auf der Kopftrommel (3) angeordnete Signalverstärker aus einer Läuferwicklung des Antriebsmotors (1) für die Trommel (3) abgeleitet ist.

6. Recorder nach Anspruch 1, dadurch gekennzeichnet, daß eine Betriebsspannung für auf der Kopftrommel (3) angeordnete Signalverstärker aus einem auf die Trommel (3) übertragenen Bittakt des Signals gewonnen ist.

7. Recorder nach Anspruch 1, dadurch gekennzeichnet, daß die Kopftrommel (3) einen Akku enthält, der bei der Betriebsart mit dem höchsten Energiebedarf (z.B. Aufnahme) entladen wird und während der übrigen Zeiten geladen wird.

8. Recorder nach einem oder mehreren der vorhergehenden Ansprüche, dadurch gekennzeichnet, daß bei der Aufnahme das auf die Trommel (3) übertragene Signal regeneriert wird, bevor es den Köpfen zugeführt wird.

9. Recorder nach einem oder mehreren der vorhergehenden Ansprüche, dadurch gekennzeichnet, daß das jeweils nicht für die Signalübertragung verwendete Übertragungsglied zur Energieübertragung dient.

## Claims

1. Recorder having a rotating head drum in which the signal is transmitted by means of a transmission member between a stationary part and the head drum (3), characterised in that, the signal transmission is effected during the recording and during the reproduction via different types of transmission members (4 -9) that are allocated to the head drum (3) and which operate in accordance with different forms of physical coupling.

2. Recorder in accordance with claim 1, characterised in that, the signal transmission is effected during the recording via slip rings and during the reproduction via a non-conductive transmission member and the slip rings serve for the supply of an operating voltage for signal amplifiers arranged on the head drum (3) during the reproduction.

3. Recorder in accordance with claim 2, characterised in that, the non-conductive transmission member is a rotary transformer or an opto-coupler (4 - 9) (Figs. 2, 3).

4. Recorder in accordance with claim 1, characterised in that, for the transmission of the recording signal via an opto-coupler, an operating voltage is supplied to the head drum (3) via a rotary transformer which serves for the signal transmission during the reproduction.

5. Recorder in accordance with claim 1, characterised in that, the operating voltage for signal amplifiers arranged on the head drum (3) is derived from a rotor winding of the drive motor (1) for the drum (3).

6. Recorder in accordance with claim 1, characterised in that, an operating voltage for signal amplifiers arranged on the head drum (3) is obtained from a clock bit pulse of the signal transmitted to the drum (3).

7. Recorder in accordance with claim 1, characterised in that, the head drum (3) contains an accumulator which is discharged during the operating mode having the highest energy requirement ( e.g. recording) and is charged during the remaining times.

8. Recorder in accordance with one or more of the preceding claims, characterised in that, the signal transmitted to the drum (3) is regenerated during the recording before it is supplied to the heads.

9. Recorder in accordance with one or more of the preceding claims, characterised in that, the transmission member not currently being used for the transmission of signals serves for the transmission of energy.

## Revendications

1. Enregistreur avec un tambour rotatif des têtes dans lequel le signal est transmis au moyen d'un élément de transmission entre une partie stationnaire et le tambour des têtes (3), **caractérisé en ce** que la transmission de signal se fait lors de l'enregistrement et de la reproduction par l'intermédiaire d'éléments de transmission de type différent (4-9) qui sont affectés au tambour des têtes (3) et qui fonctionnent d'après différentes possibilités physiques de couplage.

2. Enregistreur selon la revendication 1, **caractérisé en ce** que la transmission de signal se fait, lors de l'enregistrement, par des bagues collectrices et, lors de la reproduction, par un élément de transmission non galvanique et que les bagues collectrices servent, lors de la reproduction, à l'amenée d'une tension de fonctionnement pour des amplificateurs de signal placés sur le tambour des têtes (3).

3. Enregistreur selon la revendication 2, **caractérisé en ce** que l'élément de transmission non galvanique est un translateur rotatif ou un coupleur opto-électronique (4-9) (figures 2, 3).

4. Enregistreur selon la revendication 1, **caractérisé en ce** qu'une tension de fonctionnement est amenée, lors de la transmission du signal d'enregistrement par un coupleur opto-électronique, au tambour des têtes (3) par un translateur rotatif qui, lors de la reproduction, sert à la transmission du signal.

5. Enregistreur selon la revendication 1, **caractérisé en ce** que la tension de fonctionnement pour des amplificateurs de signal placés sur le tambour des têtes (3) est dérivée à partir d'un enroulement rotorique du moteur d'entraînement (1) pour le tambour (3).

6. Enregistreur selon la revendication 1, **caractérisé en ce** qu'une tension de fonctionnement pour des amplificateurs de signal placés sur le tambour des têtes (3) est obtenue à partir d'un rythme binaire du signal transmis au tambour (3).

7. Enregistreur selon la revendication 1, **caractérisé en ce** que le tambour des têtes (3) contient un accumulateur qui se décharge lors du mode avec les besoins en énergie les plus élevés (par exemple pour l'enregistrement) et qui se charge pendant les autres périodes.

8. Enregistreur selon l'une ou plusieurs des revendications précédentes, **caractérisé en ce** que, lors de l'enregistrement, le signal transmis au tambour (3) est régénéré avant d'être amené aux têtes.

9. Enregistreur selon l'une ou plusieurs des revendications précédentes, **caractérisé en ce** que l'élément de transmission qui n'est respectivement pas utilisé pour la transmission du signal sert à la transmission de l'énergie.
